# EUROPEAN PATENT SPECIFICATION

(11) **EP 2 532 857 B1**
(45) Date of publication and mention of the grant of the patent: **10.02.2016**
(21) Application number: 12168699.2
(22) Date of filing: 21.05.2012
(51) Int. Cl.: F02C 3/14, F23R 3/54, F23R 3/34

(54) **Turbomachine assembly with combustors having different flow directions and corresponding operating method**
Turbomaschinenanordnung mit Brennkammern von unterschiedlichen Strömungsrichtungen und zugehöriges Betriebsverfahren
Agencement de turbomachine avec chambres de combustion ayant différentes directions de flux et procédé d'exploitation associé

(30) Priority: 06.06.2011 US 201113153550
(43) Date of publication of application: 12.12.2012
(73) Proprietor: United Technologies Corporation, Hartford, CT 06101 (US)
(72) Inventor: Kupratis, Daniel B., Wallingford, CT Connecticut 06492 (US)
(74) Representative: Leckey, David Herbert

(56) References cited:
- EP-A1- 0 276 397
- EP-A1- 0 501 877
- GB-A- 814 380
- GB-A- 2 010 407

## Description

### FIELD OF INVENTION

This disclosure relates generally to a combustor section of a turbomachine and, more particularly to a combustor section that includes combustors having different flow paths.

### BACKGROUND

Turbomachines include multiple sections. A gas turbine engine is a type of turbomachine. Gas turbine engines, and other turbomachines, may include a fan section, a compressor section, a combustor section, a turbine section, and an exhaust section. During operation, air moves into the engine through the fan section. Rotors in the compressor section rotate to compress the air, which is then mixed with fuel and combusted in the combustor section. The products of combustion are expanded to rotatably drive rotors in the turbine section. The rotating turbine section rotatably drives the fan and compressor sections. Flow moves axially through the engine from the fan section to the exhaust section.

High temperatures can damage turbomachine components. Maintaining a desirable overall pressure ratio while avoiding damaging high temperatures is often difficult. For example, incorporating features to increase and maintain the overall pressure ratio can increase the size of the turbomachine.

A turbomachine assembly having the features of the preamble of claim 1 and of claim 14 is disclosed in GB-A-2010407, GB-A-814380, EP-A-276397 or EP-A-501877.

### SUMMARY

From a first aspect, the present invention provides a turbomachine assembly as set forth in claim 1.

From a second aspect, the invention provides a method of operating a turbomachine as set forth in claim 14.

### DESCRIPTION OF THE FIGURES

The various features and advantages of the disclosed examples will become apparent to those skilled in the art from the detailed description. The figures that accompany the detailed description can be briefly described as follows:
FIGURE 1 shows a section view of an example gas turbine engine.
FIGURE 2 shows a close up view of a portion of a combustion section of the FIGURE 1 engine.
FIGURE 3 shows a simplified sectional view of the FIGURE 1 engine at line 3-3 in FIGURE 2.
FIGURE 4 shows a simplified sectional view of the FIGURE 1 engine at line 4-4 in FIGURE 2.
FIGURE 5 shows a fuel delivery manifold of the FIGURE 1 engine.

### DETAILED DESCRIPTION

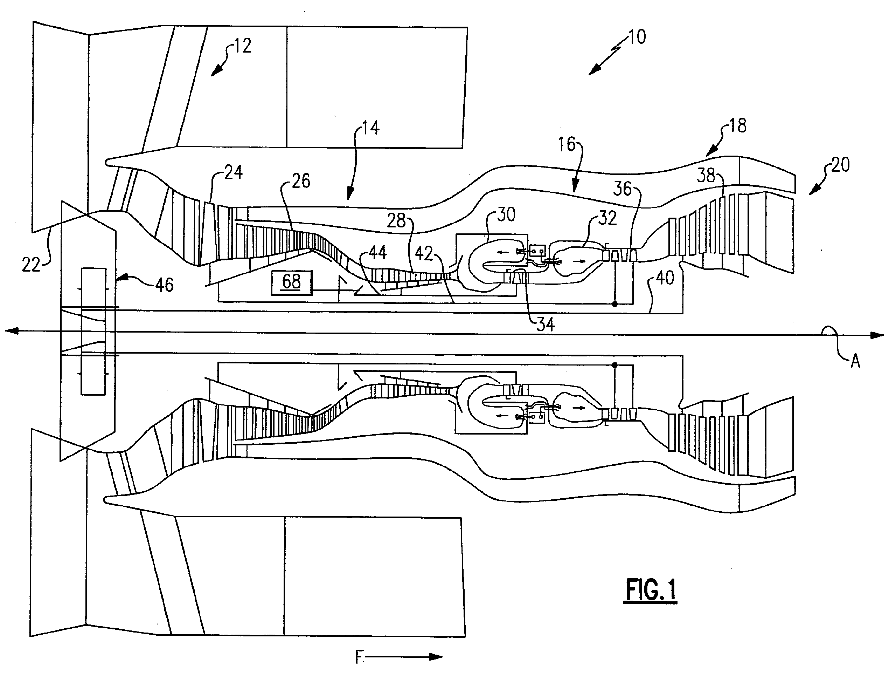

Referring to Figure 1, an example turbomachine, such as a gas turbine engine 10, is circumferentially disposed about an axis A. The gas turbine engine 10 includes a fan section 12, a compression section 14, a combustion section 16, a turbine section 18, and an exhaust section 20. Other example turbomachines may include more or fewer sections.

In this example, the fan section 12 includes a first fan 22 and a second fan 24. The example compression section 14 includes a low-pressure compressor 26 and a high-pressure compressor 28. The example combustion section 16 includes a first combustor 30 and a second combustor 32. Also, the example turbine section 18 includes a high-pressure turbine 34, an intermediate-pressure turbine 36, and low-pressure turbine 38.

The example gas turbine engine 10 includes a first spool 40, a second spool 42, and a third spool 44. The first spool 40 rotatably couples the first fan 22 to the low-pressure turbine 38. In this example, a fan drive gear system 46 is used to rotatably link the first fan 22 with the first spool 40. The second spool 42 rotatably couples the second fan 24 and the low-pressure compressor 26 to the intermediate-pressure turbine 36. The third spool 44 rotatably couples the high-pressure compressor 28 to the high-pressure turbine 34.

Except where indicated otherwise, the examples described in this disclosure are not limited to the three-spool gas turbine architecture described, and may be used in other architectures, such as a single-spool axial design, a two-spool axial design, and still other architectures. That is, there are various types of gas turbine engines, and other turbomachines, that can benefit from the examples disclosed herein.

During operation, a flow of air enters the engine 10 through the fan section 12. The flow of air is compressed in the compression section 14. The compressed flow is then mixed with fuel and combusted in the combustion section 16. The products of combustion are then expanded to rotate rotors of the turbine section 18. The rotors rotatably drive the first fan 22, the second fan 24, the low-pressure compressor 26, and the high-pressure compressor 28. Once expanded, flow exits the engine 10 at the exhaust section 20. As can be appreciated, flow generally moves through the engine 10 in a direction F.

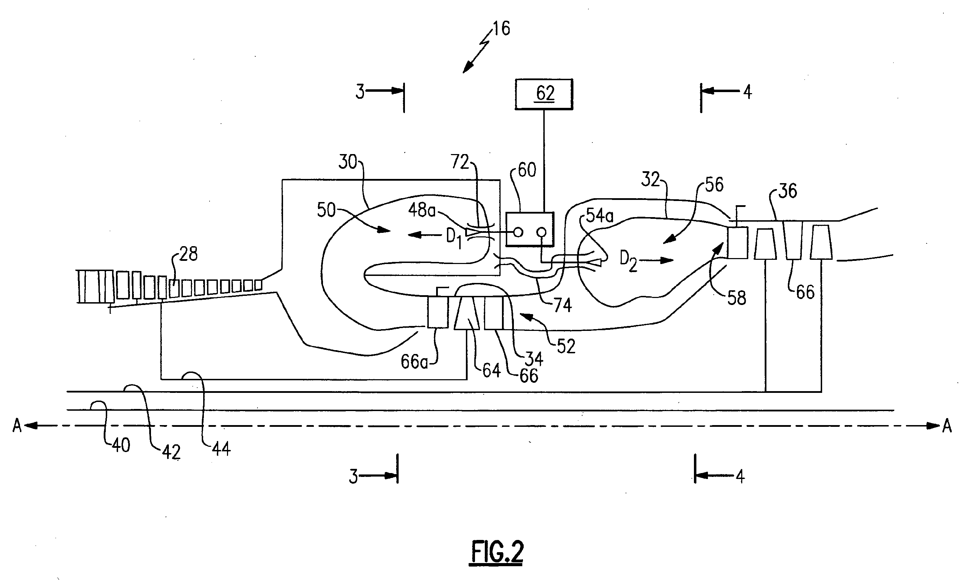

Referring to Figure 2 with continuing reference to Figure 1, the first combustor 30 includes a nozzle 48a and a first combustion chamber 50. During operation, a mixture of fuel and compressed air is injected from the nozzle 48a into the first combustion chamber 50. The nozzle 48a sprays the mixture of fuel and compressed air into the first combustion chamber 50 in a first direction D 1.

Flow moves through the first combustion chamber 50 in the first direction D1, which is opposite the general direction of flow F through the engine 10. The flow includes the products of combustion. In some examples, the first combustor 30 is considered a reverse flow combustor because the flow moves through the first combustion chamber 50 in a direction opposite the general direction of flow F through the engine 10.

Once combusted, flow moves from the first combustion chamber 50 through an outlet conduit 52 to drive the high-pressure turbine 34. Flow moves through the outlet conduit 52 in a direction opposite the first direction D1.

The second combustor 32 includes a nozzle 54a and a second combustion chamber 56. During operation, a mixture of fuel and compressed air is injected from the nozzle 54a into the second combustion chamber 56 of the second combustor 32. Notably, the nozzle 54a sprays the mixture of fuel and compressed air into the second combustion chamber 56 in a second direction D2, which is the same as the general direction of flow F through the engine 10.

Flow moves from the second combustion chamber 56 through an outlet conduit 58 to drive the intermediate-pressure turbine 36. The flow includes the products of combustion within the second combustor 32. As can be appreciated, flow moves through the first combustion chamber 50 and the second combustion chamber 56 in opposite directions.

In this example, a single fuel manifold 60 is used to control the flow of fuel to both the nozzle 48a of the first combustor 30 and the nozzle 54a of the second combustor 32. The single fuel manifold 60 receives fuel from a fuel supply 62. Arranging the nozzle 48a to be axially adjacent the nozzle 54a facilitates this communication of fuel from the single fuel manifold 60.

A swirl air conduit 72 swirls and delivers pressurized air from the high-pressure compressor 28 to the combustor 30. Another swirl air conduit 74 swirls and delivers pressurized air from high-pressure compressor 28 and combustor housing to the fuel nozzles 54a. The air delivered by the conduits 72 and 74 facilitates atomization and cools the nozzles 48a and 54a to prevent coking.

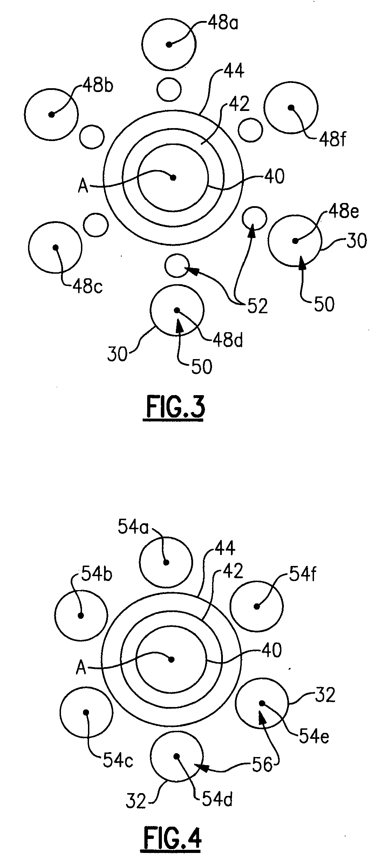

Referring now to Figures 3-5 with continuing reference to Figure 2, the example gas turbine engine 10 includes six of the first combustors 30 and six of the second combustors 32. The first combustors 30 and the second combustors 32 are circumferentially distributed about the axis A. The first combustors 30 are axially in front of the second combustors 32 relative to the direction of flow F through the engine 10.

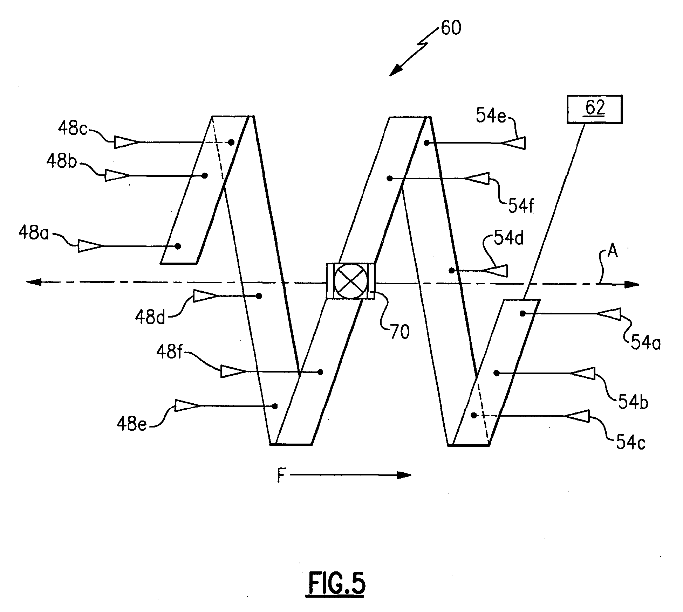

In this example, the single fuel manifold 60 delivers fuel to all twelve of the combustors 30 and 32 within the engine 10. Notably, the fuel manifold 60 is a helix that is centered radially about the axis A, and centered axially relative to the first combustors 30 and the second combustors 32. The example fuel manifold 60 is configured to deliver fuel to the fuel nozzles 54a-54f of the second combustors 32 prior to the fuel nozzles 48a-48f of the first combustors 30. Notably, the fuel manifold 60 shown in Figure 5 has been axially stretched for clarity.

The fuel manifold 60 includes a valve 70 that can be closed to block fuel flow to the first combustors 30. When the valve 70 is closed, no fuel is combusted in first combustors 30. When no fuel is combusted in the first combustors 30, the high-pressure turbine 34 windmills, which causes the high-pressure compressor 28 to rotate at an insufficient speed to generate a significant increase in the temperature or pressure of the air. In one example, the valve 70 is closed when the engine 10 (Figure 1) is propelling an aircraft during takeoff on a hot day. In another example, the valve 70 is opened when the engine 10 is propelling an aircraft during cruise. Opening the valve 70 delivers fuel to the first combustors 30, which drive the high-pressure turbine 34 to maximize the compression pressure of high-pressure compressor 28. The power of the engine 10 is thus controlled in part by controlling the fuel supply 62.

In this example, the products of combustion moving through the outlet conduit 52 drive the third spool 44, and the products of combustion moving through the outlet conduit 58 drive the second spool 42. The example first combustor 30 and the second combustor 32 are thus configured to drive different spools.

The spools 40, 42, and 44 are held by bearing arrangements in a known manner. Sealing of the hot gas path from the shafts 40, 42, and 44 and the bearing arrangements is also executed in a known manner.

In some examples, the nozzles 54a-54f introduce air and uncombusted fuel from the outlet conduit 52 into the second combustion chamber 56. In such examples, the nozzle 54a is able to introduce fuel into the second combustion chamber 56 even if the nozzle 54a is not connected to the single fuel manifold 60. That is, the first combustor 30 may not combust all of the fuel introduced by the nozzles 48a-48f. This fuel is not wasted, because the second combustor 32 is able to combust this fuel.

The example rotors in the turbine section 18 include an array of blades 64 that rotate together with the third shaft 44 about the axis A. The example high-pressure turbine 34 also includes two axial rows of vanes 66 that do not rotate.

In this example, the vanes 66a in the first row are adjustable vanes. That is, the vanes 66a can be pivoted, or otherwise actuated, to control flow through the high-pressure turbine 34. Controlling flow through the high-pressure turbine 34 regulates rotation of the high-pressure compressor 28, which is rotatably coupled to the high-pressure turbine 34. In this example, the vanes 66a are pivoted about a radially extending axis. Other examples include other ways of manipulating the vanes 66a to control flow through the high-pressure turbine 34.

A person having skill in this art and the benefit of this disclosure would understand how to vary the position of the vanes 66 and 66a to control flow through the high-pressure turbine 34. United States Published Application No. 20090016871, discloses an example configuration having variable vanes that control flow through a gas turbine engine. Other examples configurations of variable vanes could be used.

Although only the high-pressure turbine 34 is described as having variable vanes 66a, the intermediate-pressure turbine 36 and the low-pressure turbine 38 could also include variable vanes. That is, any area of the turbine section 18 could include variable vanes to control flow through a desired area of the turbine section 18. Also, the blades 64 in turbine section 18, or other components, could be varied to control flow through a desired area of the turbine section 18.

The example engine 10 may include a clutch 68. The low-pressure compressor 26 and the high-pressure compressor 28 are selectively coupled in rotation together via the clutch 68. In some examples, coupling the low-pressure compressor 26 together with the high-pressure compressor 28 slows the rotational speed of the low-pressure compressor 26 to desirably reduce the pressure ratio of the high-pressure compressor 28.

Features of some of the disclosed examples include a back-to-back arrangement of the first combustor and the second combustor, which decreases the axial length of the engine over other designs. The back-to-back arrangement also enables a delivering fuel to the combustors using a single fuel manifold. Another feature of some of the disclosed examples includes the variable turbines, which can act as chokepoint for flow through the engine.

The preceding description is exemplary rather than limiting in nature. Variations and modifications to the disclosed examples may become apparent to those skilled in the art that do not necessarily depart from the essence of this disclosure. Thus, the scope of legal protection given to this disclosure can only be determined by studying the following claims.

## Claims

1. A turbomachine assembly, comprising:
a first combustor (30) configured to combust fuel and compressed air; and
a second combustor (32) configured to combust fuel and compressed air, wherein flow moves through the first combustor (30) in a first direction and flow moves though the second combustor (32) in a second direction different than the first direction, the first combustor (30) axially spaced from the second combustor (32);
**characterised in that**:
products of combustion from the first combustor (30) arc expanded to drive a first spool (44), and products of combustion from the second combustor (32) are expanded to drive a second spool (42) different than the first spool (44).

2. The turbomachine assembly of claim 1, wherein the first direction is opposite a general direction of flow through the turbomachine, the general direction of flow extending from a fan section (12) of the turbomachine to an exhaust section (20) of the turbomachine.

3. The turbomachine assembly of claim 1 or 2, wherein the first combustor (30) comprises a plurality of reverse flow combustors (30) annularly distributed about an axis of the turbomachine.

4. The turbomachine assembly of any preceding claim, wherein a compressor (28) directly provides compressed air to the first combustor (30), and a turbine section (34) directly provides compressed air to the second combustor (32).

5. The turbomachine assembly of claim 4, wherein the turbine section (34) includes variable vanes (66a).

6. The turbomachine assembly of claim 1, comprising:
a compressor section (14), the first combustor (30) receiving a flow of compressed fluid from the compressor section (14);
a first turbine section (34) that receives a product of combustion from the first combustor (30), the second combustor (32) receiving a flow of compressed fluid from the first turbine section (34); and
a second turbine section (36) receiving a product of combustion from the second combustor (32).

7. The turbomachine assembly of claim 6, wherein the first turbine section (34) is a higher pressure turbine than the second turbine section (36).

8. The turbomachine assembly of claim 6 or 7, wherein the first turbine section (34) drives the first spool (44), and the second turbine section (36) drives the second spool (42).

9. The turbomachine assembly of claim 6, 7 or 8, wherein the first spool (44) is rotatably coupled to a high-pressure compressor (28) of the compressor section, and the second spool (42) is rotatably coupled to a low-pressure compressor (26) of the compressor section (14).

10. The turbomachine assembly of claim 9, further including:
a third turbine section (38) that is rotatably coupled to a fan with a third spool (40).

11. The turbomachine assembly of any preceding claim, including a manifold (60) configured to supply fuel to both the first combustor (30) and the second combustor (32).

12. The turbomachine assembly of any preceding claim, wherein the first direction is opposite the second direction.

13. The turbomachine assembly of any preceding claim, wherein the turbomachine is a gas turbine engine (10).

14. A method of operating a turbomachine, comprising:
moving a mixture of fuel and compressed air through a first combustor section (30) in a first direction; and
moving a mixture of fuel and compressed air through a second combustor section (32) in a second direction different than the first direction, **characterised by**:
driving a first turbine section (34) with the first combustor section (30) and driving a second turbine section (36) with the second combustor section (32), the first turbine section (34) and the second turbine section (36) configured to drive different spools (44,42).

15. The method of claim 14, further comprising:
communicating products of combustion from the first combustor section (30) to the first turbine section (34) and communicating compressed air from the first turbine section (34) to the second combustor section (32); and/or
communicating fuel to the first combustor section (30) and the second combustor section (32) using a common manifold (60).

## Patentansprüche

1. Turbomaschinenbaugruppe, umfassend:
eine erste Brennkammer (30), die konfiguriert ist, um Kraftstoff und Druckluft zu verbrennen; und
eine zweite Brennkammer (32), die konfiguriert ist, um Kraftstoff und Druckluft zu verbrennen, wobei sich eine Strömung durch die erste Brennkammer (30) in einer ersten Richtung bewegt, und sich eine Strömung durch die zweite Brennkammer (32) in einer zweiten Richtung bewegt, die sich von der ersten Richtung unterscheidet, wobei die erste Brennkammer (30) axial von der zweiten Brennkammer (32) beabstandet ist;
**dadurch gekennzeichnet, dass**
Verbrennungsprodukte von der ersten Brennkammer (30) ausgedehnt werden, um eine erste Welle (44) anzutreiben, und Verbrennungsprodukte von der zweiten Brennkammer (32) ausgedehnt werden, um eine zweite Welle (42) anzutreiben, die sich von der ersten Welle (44) unterscheidet.

2. Turbomaschinenbaugruppe nach Anspruch 1, wobei die erste Richtung entgegengesetzt zu einer allgemeinen Richtung der Strömung durch die Turbomaschine verläuft, wobei sich die allgemeine Richtung der Strömung von einem Gebläseabschnitt (12) der Turbomaschine zu einem Abgasabschnitt (20) der Turbomaschine erstreckt.

3. Turbomaschinenbaugruppe nach Anspruch 1 oder 2, wobei die erste Brennkammer (30) eine Vielzahl von Umlenkbrennkammern (30) aufweist, die ringförmig um eine Achse der Turbomaschine verteilt ist.

4. Turbomaschinenbaugruppe nach einem der vorangegangenen Ansprüche, wobei ein Verdichter (28) der ersten Brennkammer (30) direkt Druckluft bereitstellt, und ein Turbinenabschnitt (34) der zweiten Brennkammer (32) direkt Druckluft bereitstellt.

5. Turbomaschinenbaugruppe nach Anspruch 4, wobei der Turbinenabschnitt (34) variable Schaufeln (66a) umfasst.

6. Turbomaschinenbaugruppe nach Anspruch 1, umfassend:
einen Verdichterabschnitt (14), wobei die erste Brennkammer (30) eine Strömung von Druckfluid von dem Verdichterabschnitt (14) erhält;
einen ersten Turbinenabschnitt (34), der ein Verbrennungsprodukt von der ersten Brennkammer (30) erhält, wobei die zweite Brennkammer (32) eine Strömung von Druckfluid von dem ersten Turbinenabschnitt (34) erhält; und
einen zweiten Turbinenabschnitt (36), der ein Verbrennungsprodukt von der zweiten Brennkammer (32) erhält.

7. Turbomaschinenbaugruppe nach Anspruch 6, wobei der erste Turbinenabschnitt (34) eine Turbine mit höherem Druck als der zweite Turbinenabschnitt (36) ist.

8. Turbomaschinenbaugruppe nach Anspruch 6 oder 7, wobei der erste Turbinenabschnitt (34) die erste Welle (44), und der zweite Turbinenabschnitt (36) die zweite Welle (42) antreibt.

9. Turbomaschinenbaugruppe nach Anspruch 6, 7 oder 8, wobei die erste Welle (44) drehbar mit einem Hochdruckverdichter (28) des Verdichterabschnitts gekoppelt ist und die zweite Welle (42) drehbar mit einem Niederdruckverdichter (26) des Verdichterabschnitts (14) verbunden ist.

10. Turbomaschinenbaugruppe nach Anspruch 9, weiterhin umfassend:
einen dritten Turbinenabschnitt (38), der drehbar mit einem Gebläse mit einer dritten Welle (40) verbunden ist.

11. Turbomaschinenbaugruppe nach einem der vorangegangenen Ansprüche, die einen Verteiler (60) umfasst, der konfiguriert ist, um Kraftstoff sowohl zu der ersten Brennkammer (30) als auch zu der zweiten Brennkammer (32) zu liefern.

12. Turbomaschinenbaugruppe nach einem der vorangegangenen Ansprüche, wobei die erste Richtung entgegengesetzt zu der zweiten Richtung ist.

13. Turbomaschinenbaugruppe nach einem der vorangegangenen Ansprüche, wobei die Turbomaschine ein Gasturbinenmotor (10) ist.

14. Verfahren zum Betrieb einer Turbomaschine, umfassend:
Bewegen einer Mischung aus Kraftstoff und Druckluft durch einen ersten Brennkammerabschnitt (30) in einer ersten Richtung; und
Bewegen einer Mischung aus Kraftstoff und Druckluft durch einen zweiten Brennkammerabschnitt (32) in einer zweiten Richtung, die sich von der ersten Richtung unterscheidet; **gekennzeichnet durch**:
Antreiben eines ersten Turbinenabschnitts (34) mit dem ersten Brennkammerabschnitt (30) und Antreiben eines zweiten Turbinenabschnitts (36) mit dem zweiten Brennkammerabschnitt (32), wobei der erste Turbinenabschnitt (34) und der zweite Turbinenabschnitt (36) konfiguriert sind, um unterschiedliche Wellen (44,42) anzutreiben.

15. Verfahren nach Anspruch 14, weiterhin umfassend:
Übertragen von Verbrennungsprodukten von dem ersten Brennkammerabschnitt (30) zu dem ersten Turbinenabschnitt (34), und Übertragen von Druckluft von dem ersten Turbinenabschnitt (34) zu dem zweiten Brennkammerabschnitt (32); und/oder
Übertragen von Kraftstoff zu dem ersten Brennkammerabschnitt (30) und dem zweiten Brennkammerabschnitt (32) unter Verwendung eines gemeinsamen Verteilers (60).

## Revendications

1. Agencement de turbomachine, comprenant :
une première chambre de combustion (30) configurée pour assurer la combustion de carburant et d'air comprimé ; et une seconde chambre de combustion (32) configurée pour assurer la combustion de carburant et d'air comprimé, dans lequel un flux traverse la première chambre de combustion (30) dans une première direction et un flux traverse la seconde chambre de combustion (32) dans une seconde direction différente de la première direction, la première chambre de combustion (30) étant espacée axialement de la seconde chambre de combustion (32) ;
**caractérisé en ce que** :
les produits de combustion issus de la première chambre de combustion (30) sont dilatés pour entraîner une première bobine (44), et les produits de combustion issus de la seconde chambre de combustion (32) sont dilatés pour entraîner une deuxième bobine (42) différente de la première bobine (44).

2. Agencement de turbomachine selon la revendication 1, dans lequel la première direction est opposée à une direction générale de flux à travers la turbomachine, la direction générale de flux s'étendant à partir d'une section de soufflante (12) de la turbomachine vers une section d'échappement (20) de la turbomachine.

3. Agencement de turbomachine selon la revendication 1 ou 2, dans lequel la première chambre de combustion (30) comprend une pluralité de chambres de combustion à flux inverse (30) réparties de manière annulaire autour d'un axe de la turbomachine.

4. Agencement de turbomachine selon l'une quelconque des revendications précédentes, dans lequel un compresseur (28) fournit directement de l'air comprimé à la première chambre de combustion (30), et une section de turbine (34) fournit directement de l'air comprimé à la seconde chambre de combustion (32).

5. Agencement de turbomachine selon la revendication 4, dans lequel la section de turbine (34) comprend des aubes variables (66a).

6. Agencement de turbomachine selon la revendication 1, comprenant :
une section de compresseur (14), la première chambre de combustion (30) recevant un flux de fluide comprimé de la section de compresseur (14) ;
une première section de turbine (34) qui reçoit un produit de combustion de la première chambre de combustion (30), la seconde chambre de combustion (32) recevant un flux de fluide comprimé de la première section de turbine (34) ; et
une deuxième section de turbine (36) recevant un produit de combustion de la seconde chambre de combustion (32).

7. Agencement de turbomachine selon la revendication 6, dans lequel la première section de turbine (34) est une turbine de pression plus élevée que la deuxième section de turbine (36).

8. Agencement de turbomachine selon la revendication 6 ou 7, dans lequel la première section de turbine (34) entraîne la première bobine (44), et la deuxième section de turbine (36) entraîne la deuxième bobine (42).

9. Agencement de turbomachine selon la revendication 6, 7 ou 8, dans lequel la première bobine (44) est couplée de manière rotative à un compresseur haute pression (28) de la section de compresseur, et la deuxième bobine (42) est couplée de manière rotative à un compresseur basse pression (26) de la section de compresseur (14).

10. Agencement de turbomachine selon la revendication 9, comprenant en outre :
une troisième section de turbine (38) qui est couplée de manière rotative à une soufflante avec une troisième bobine (40).

11. Agencement de turbomachine selon l'une quelconque des revendications précédentes, comprenant un collecteur (60) configuré pour fournir du carburant à la fois à la première chambre de combustion (30) et à la seconde chambre de combustion (32).

12. Agencement de turbomachine selon l'une quelconque des revendications précédentes, dans lequel la première direction est opposée à la seconde direction.

13. Agencement de turbomachine selon l'une quelconque des revendications précédentes, dans lequel la turbomachine est un moteur à turbine à gaz (10).

14. Procédé d'exploitation d'une turbomachine, comprenant :
le passage d'un mélange de carburant et d'air comprimé à travers une première section de chambre de combustion (30) dans une première direction ; et
le passage d'un mélange de carburant et d'air comprimé à travers une seconde section de chambre de combustion (32) dans une seconde direction différente de la première direction, **caractérisé par** :
l'entraînement d'une première section de turbine (34) avec la première section de chambre de combustion (30) et l'entraînement d'une deuxième section de turbine (36) avec la seconde section de chambre de combustion (32), la première section de turbine (34) et la deuxième section de turbine (36) étant configurées pour entraîner différentes bobines (44, 42).

15. Procédé selon la revendication 14, comprenant en outre :
la transmission de produits de combustion de la première section de chambre de combustion (30) à la première section de turbine (34) et la transmission d'air comprimé de la première section de turbine (34) à la seconde section de chambre de combustion (32) ; et/ou la transmission de carburant à la première section de chambre de combustion (30) et à la seconde section de chambre de combustion (32) au moyen d'un collecteur commun (60).
